(19) Europäisches Patentamt
European Patent Office
Office européen des brevets

(11) **EP 2 233 820 B1**

(12) **EUROPÄISCHE PATENTSCHRIFT**

(45) Veröffentlichungstag und Bekanntmachung des Hinweises auf die Patenterteilung:
**28.09.2016   Patentblatt 2016/39**

(21) Anmeldenummer: **10157957.1**

(22) Anmeldetag: **26.03.2010**

(51) Int Cl.:
*F21K 99/00* (2016.01)   *G02B 3/10* (2006.01)
*G02B 27/00* (2006.01)   *H01L 25/075* (2006.01)
*F21V 14/06* (2006.01)   *G02B 27/09* (2006.01)
*F21Y 105/00* (2016.01)

(54) **Beleuchtungvorrichtung mit einer Lichtquelle mit mehreren Leuchtdiodenchips, mit einem konischen Reflektor und einer verstellbaren Linse**

Illumination device with a light source comprising several LED chips, a conical reflector and a movable lens

Dispositif d'éclairage comprenant une source lumineuse à plusieurs chips LEDs, un réflecteur conique et une lentille mobile

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.03.2009   DE 102009015424**

(43) Veröffentlichungstag der Anmeldung:
**29.09.2010   Patentblatt 2010/39**

(73) Patentinhaber: **JB-Lighting Lichtanlagentechnik GmbH**
**89134 Blaustein (DE)**

(72) Erfinder:
• **Nikolaus, Ines**
**85457 Hörlkofen (DE)**

• **Timinger, Andreas**
**80807 München (DE)**

(74) Vertreter: **Ganahl, Bernhard et al**
**Patronus IP**
**Patent- und Rechtsanwälte**
**Neumarkter Strasse 18**
**81673 München (DE)**

(56) Entgegenhaltungen:
**EP-A1- 2 119 955     EP-A1- 2 211 089**
**DE-T2- 60 217 523     US-A1- 2006 092 643**
**US-B1- 6 200 002**

## Beschreibung

Die vorliegende Erfindung betrifft eine Beleuchtungsvorrichtung mit einer Lichtquelle, einem Reflektor und zumindest einer Linse.

Es sind Beleuchtungsvorrichtungen mit einer Lichtquelle, einem die Lichtquelle umschließenden Reflektor und einer den Reflektor vorgeordneten Linse bekannt. Derartige Beleuchtungsvorrichtungen weisen meistens eine Lichtquelle, wie zum Beispiel eine Glühlampe, Halogenlampe oder dergleichen auf, und sind derart dimensioniert, dass die Lichtquelle näherungsweise eine punktförmige Lichtquelle in Bezug auf den Reflektor und die Linse darstellt.

Aus der DE 298 04 248 U1, der DE 199 01 391 A1, der DE 86 22 788 U1 und der US 2,282,167 sind jeweils Beleuchtungsvorrichtungen, insbesondere Scheinwerfer, bekannt, bei welchen durch Verschieben der optischen Elemente (Linsen) der Öffnungswinkel des Lichtstrahlenbündels verstellbar ist.

Die EP 2 211 089 A1 betrifft eine Beleuchtungsvorrichtung nach dem Oberbegriff des Anspruchs 1 mit einer Linse zum Bündeln von Licht, die entlang einer optischen Achse der Beleuchtungsvorrichtung verschieblich angeordnet ist.

Die US 2006/092643 A1 beschreibt eine Beleuchtungsvorrichtung mit einer Leuchtdiode, die von einem konischen Reflektor umgeben ist, wobei das abgestrahlte Licht mittels einer Linse gebündelt wird. Die Linse weist einen flachen Punkt (flat spot) in der Mitte der beiden gekrümmten Oberflächen auf und die gekrümmten Oberflächen beschreiben Querschnitte in Form von Ellipsen. Diese Linse hat keinen eindeutigen Brennpunkt, sondern einen Brennpunktbereich, der sich entlang der optischen Achse der Linse erstreckt. Da der "flat spot" sehr flach ist, ist der hierdurch verursachte Brennpunkt sehr weit von der Linse entfernt, wohingegen der vom elliptisch gekrümmten Bereich verursachte Brennpunkt wesentlich kürzer ist.

Aus der US 6,200,002 B1 geht eine Beleuchtungsvorrichtung hervor, die als Lichtquelle ein Array von Leuchtdioden aufweist.

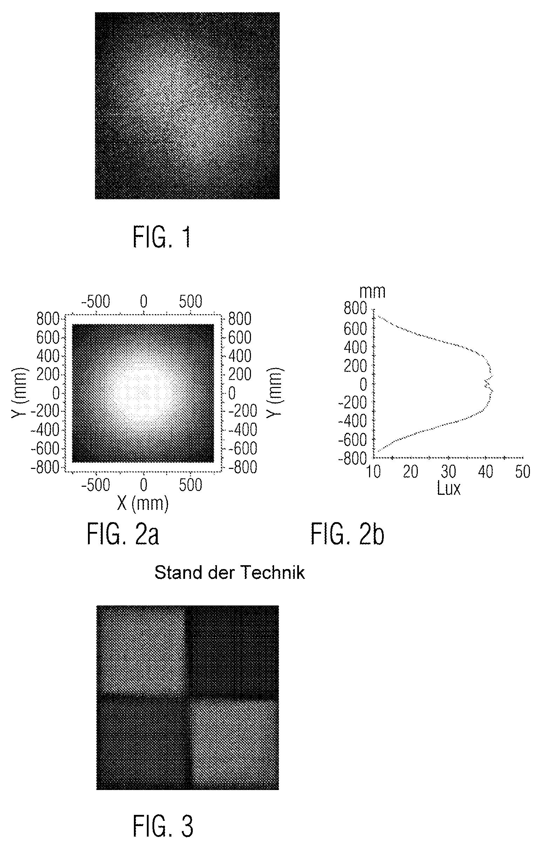

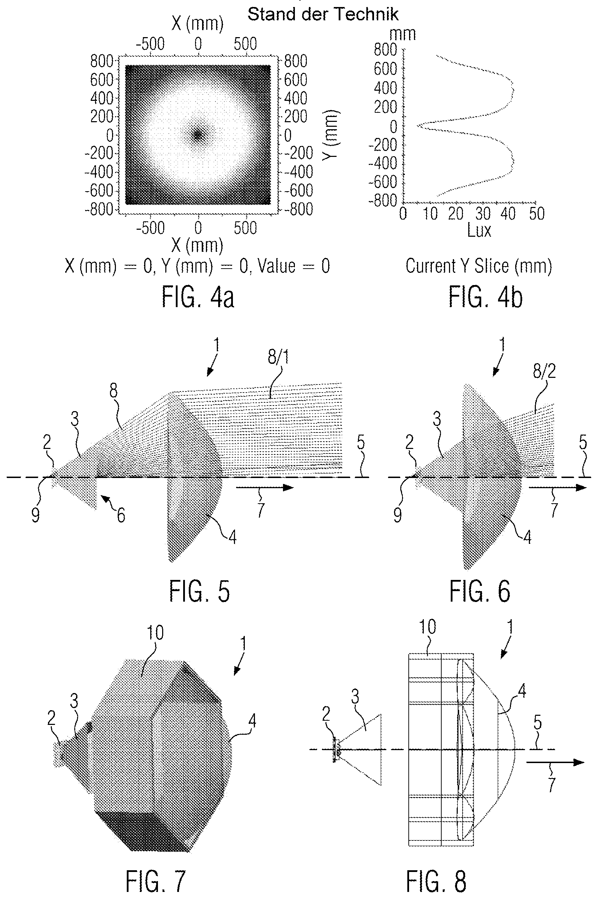

Wird eine ausgedehnte Lichtquelle im Reflektor angeordnet, dann besteht das Problem, dass die Struktur der ausgedehnten Lichtquelle durch die Linse optisch abgebildet werden kann, was zu einem Lichtstrahlkegel mit ungleichmäßiger Intensität führt. Ist die Lichtquelle beispielsweise ein Leuchtdiodenarray mit zum Beispiel vier Leuchtdioden, die jeweils eine quadratische Abstrahlfläche besitzen und in einem Quadrat angeordnet sind, so befinden sich zwischen den einzelnen Abstrahlflächen dunkle Streifen (Fig. 3). Mit herkömmlichen Linsen und Reflektoren wird diese Struktur der Lichtquelle derart abgebildet, dass sich ein Fernfeld ergibt, das in der Mitte eine geringe Lichtstärkeverteilung aufweist. Vom Zentrum nach außen nimmt die Lichtstärkeverteilung zu, bis sie an einem Randbereich wieder abfällt (Fig. 4a, 4b).

Die Erfinder der vorliegenden Erfindung haben dieses Problem erkannt und wollten diese Struktur beseitigen: Hierzu hatten sie einen konischen Reflektor mit einer engen und einer weiten Öffnung vorgesehen. Im Bereich der engen Öffnung wurde eine Lichtquelle angeordnet. Eine Linse ist mit dem Brennpunkt im Bereich der weiten Öffnung des konischen Reflektors angeordnet worden. Im Bereich der weiten Öffnung ist das Licht der mehreren Leuchtdioden im Ortsraum gut durchmischt. Wird dieses gut durchmischte Licht mit der Linse in das Unendliche abgebildet, dann erhält man einen Lichtkegel mit gleichmäßiger Lichtintensität. Das Problem der Abbildung der Struktur einer ausgedehnten, nicht-punktförmigen Lichtquelle wird hiermit beseitigt. Diese, von den Erfindern nicht veröffentlichte Ausgestaltung einer Beleuchtungsvorrichtung, erzeugt zwar einen Lichtstrahlkegel mit gleichmäßiger Lichtintensität, will man jedoch die Öffnungsweite des Lichtstrahlkegels einstellbar gestalten, indem man die Linse bezüglich des Reflektors verschieblich ausbildet, dann entsteht entweder das Problem, dass der Brennpunkt zu nahe an die Lichtquelle gelangt, so dass die Strukturen der Lichtquelle im Lichtstrahlkegel erkennbar werden oder bei größerem Abstand der Linse vom Reflektor die Lichtstärke des Lichtstrahlkegels erheblich abnimmt.

Der Erfindung liegt die Aufgabe zugrunde, eine Beleuchtungsvorrichtung mit einer ausgedehnten Lichtquelle zu schaffen, bei der die Aufweitung des Lichtkegels einstellbar ist, der Lichtkegel eine gleichmäßige Lichtstärkeverteilung, insbesondere ohne Verringerung der Lichtstärkeverteilung im Zentrum des Lichtstrahlkegels, aufweist und das von der Lichtquelle abgegebene Licht sehr effizient zum Lichtkegel gebündelt wird.

Die Aufgabe wird durch eine Beleuchtungsvorrichtung mit den Merkmalen des Anspruchs 1 gelöst. Vorteilhafte Ausgestaltungen sind in den Unteransprüchen angegeben.

Die erfindungsgemäße Beleuchtungsvorrichtung umfasst

eine ausgedehnte Lichtquelle,

einen Reflektor, der die Lichtquelle umschließt und als konischer Stumpf mit einer Öffnung am aufgeweiteten Ende des Reflektors und einem verjüngten Ende, an dem die Lichtquelle derart angeordnet ist, dass das Licht in Richtung zur Öffnung des Reflektors abgestrahlt wird, ausgebildet ist, und

eine Linse zum Bündeln des abgestrahlten Lichtes, wobei die Linse entlang einer optischen Achse der Beleuchtungsvorrichtung innerhalb eines vorbestimmten Verschiebebereichs verschieblich derart angeordnet ist, dass der Brennpunkt der Linse in Abstrahlrichtung zumindest in einem Bereich hinter der fiktiven Spitze des Reflektors verschoben werden kann.

Eine ausgedehnte Lichtquelle ist eine nicht-punktförmige Lichtquelle, die Strukturen besitzt. Eine solche ausgedehnte Lichtquelle kann mehrere einzelne Lichtquellen oder auch eine einzelne nicht-punktförmige Abstrahlfläche umfassen. Die Strukturen der ausgedehnten Lichtquelle erzeugen einen Lichtstrahlkegel, in dem die Strukturen der Lichtquelle erkennbar sind. Bereiche der ausgedehnten Lichtquelle, von welchen Licht abgestrahlt wird, werden im Folgenden als Strukturbereiche bezeichnet.

Die Erfinder der vorliegenden Erfindung haben erkannt, dass die Lichtquelle von einem konischen Reflektor derart gespiegelt wird, dass einem Betrachter die Spiegelbilder der Lichtquelle als auf einem Ausschnitt einer Kugel angeordnet erscheinen. Diese Kugel ist konzentrisch zur fiktiven Spitze des konischen Reflektors. Innerhalb des Abstrahlwinkels des Reflektors erscheinen die gespiegelten Lichtquellen und die originale Lichtquelle auf dieser Kugelschale angeordnet unabhängig von der Richtung, mit welcher man in den Reflektor hineinblickt.

Diese auf einen Ausschnitt einer Kugel angeordneten Lichtquellen strahlen jeweils separate Lichtstrahlkegel ab. Jeder dieser Lichtstrahlkegel weist mittige Schwerpunktstrahlen auf. Diese Schwerpunktstrahlen sind so gerichtet, dass sie von der fiktiven Spitze des Reflektors zu stammen scheinen und bezüglich der fiktiven Spitze des Reflektors eine Kugelwelle bilden.

Wird die Linse mit ihrem Brennpunkt an der fiktiven Spitze des konischen Reflektors angeordnet, dann bewirkt dies die folgenden beiden Effekte:

1. Es wird eine optimale Bündelung des Lichtes nahe an der physikalischen Grenze erzielt.
2. Es wird eine gute Durchmischung der Lichtstrahlen der unterschiedlichen Strukturbereiche erzielt.

Da die Schwerpunktstrahlen aller gespiegelten und nicht-gespiegelten Lichtquellen bzw. Strukturbereiche der ausgedehnten Lichtquelle ihren Ursprung an der fiktiven Spitze des konischen Reflektors zu haben scheinen, bilden diese Schwerpunktstrahlen eine Kugelwelle, die bei Anordnung der Linse mit dem Brennpunkt auf der fiktiven Spitze optimal gebündelt wird. Die weiteren Lichtstrahlen, die keine Schwerpunktstrahlen sind, werden selbstverständlich nicht so optimal wie die Schwerpunktstrahlen gebündelt. Jedoch ist die Bündelung der weiteren Lichtstrahlen auch noch sehr gut, da von einem Großteil dieser weiteren Strahlen deren Richtung nur geringfügig von der Richtung der Schwerpunktstrahlen abweicht und diese weiteren Strahlen nur geringfügig weniger effizient als die Schwerpunktstrahlen gebündelt werden.

Wenn der Brennpunkt der Linse einen Abstand von der ausgedehnten Lichtquelle bzw. von deren Spiegelbildern aufweist, wird zuverlässig eine optische Abbildung der ausgedehnten Lichtquelle vermieden, wodurch eine Durchmischung der Lichtstrahlen der unterschiedlichen Strukturbereiche erzielt wird. In dem in Abstrahlrichtung hinter der fiktiven Spitze befindlichen Verschiebebereich wird somit eine sehr gute Durchmischung der Lichtstrahlen der unterschiedlichen Strukturbereiche erzielt. Der Abstand zwischen dem Brennpunkt der Linse und der ausgedehnten Lichtquelle beträgt vorzugsweise mindestens den Abstand zwischen der fiktiven Spitze und der ausgedehnten Lichtquelle.

Wird von der Stellung, in welcher der Brennpunkt der Linse auf der fiktiven Spitze des konischen Reflektors angeordnet ist, die Linse bezüglich der Abstrahlrichtung nach hinten bewegt, d.h., die Linse in Richtung zur Lichtquelle bzw. in Richtung zum Reflektor bewegt, dann wird hierdurch der Lichtstrahlkegel aufgeweitet. Der im Lichtstrahlkegel enthaltene Lichtstrom bleibt im Wesentlichen unverändert. Der Brennpunkt der Linse wird hierbei von dem Kugelausschnitt, auf dem sich die gespiegelten Lichtquellen bzw. Strukturen der ausgedehnten Lichtquelle befinden, wegbewegt, so dass aufgrund des großen Abstandes zwischen dem Brennpunkt und dem (gespiegelten) Lichtquellenstrukturen eine gute Durchmischung des von den einzelnen Lichtquellenstrukturen stammenden Lichtes erzielt wird.

Somit wird durch das Anordnen des Brennpunktes der Linse in der Abstrahlrichtung hinter oder auf der fiktiven Spitze des Reflektors ein Lichtstrahlkegel mit gleichmäßiger Lichtstärkeverteilung und hohem Lichtstrom erzeugt. Durch das Verschieben der Linse bezüglich des Reflektors bzw. der Lichtquelle kann der Öffnungswinkel des von der Beleuchtungsvorrichtung abgegebenen Lichtstrahlkegels verändert werden.

Vorzugsweise ist die Beleuchtungsvorrichtung so ausgebildet, dass sich der Verschiebebereich der Linse in Abstrahlrichtung so weit nach vorne erstreckt, dass der Brennpunkt der Linse in Deckung mit der fiktiven Spitze des Reflektors oder zumindest in Nähe zur fiktiven Spitze gebracht werden kann. Hierbei wird eine fast optimale Bündelung des von der ausgedehnten Lichtquelle abgestrahlten Lichtes erzielt.

Grundsätzlich ist es auch möglich, dass der Brennpunkt der Linse auch von der fiktiven Spitze zur ausgedehnten Lichtquelle bewegt wird, wobei dann aber mit zunehmender Nähe zur Lichtquelle sich die Durchmischung verschlechtert. Wesentlich für die vorliegende Erfindung ist, dass der Verschiebebereich zumindest einen Bereich umfasst, bei dem der Brennpunkt der Linse sich in Abstrahlrichtung hinter der fiktiven Spitze befindet.

Eine bevorzugte Ausführungsform der Beleuchtungsvorrichtung weist als Lichtquelle ein Leuchtdiodenarray auf und der Reflektor besitzt im Querschnitt eine regelmäßige polygonale Form, insbesondere die Form eines Quadrates.

Bei einer bevorzugten Ausführungsform ist die Linse derart groß bemessen, dass sie in maximalem Abstand der Linse vom Reflektor den vom Reflektor austretenden Lichtstrahlkegel vollständig umfasst.

Die Linse kann vorzugsweise multifokal, insbesondere bifokal ausgebildet sein, wobei die Brennweite vorzugsweise in einem zentralen Bereich der Linse kleiner als außerhalb dieses zentralen Bereichs der Linse ist. Hierdurch werden Lichtstrahlen, die durch den zentralen Bereich der Linse treten, stärker abgelenkt als Lichtstrahlen, die außerhalb dieses zentralen Bereiches durch die Linse treten. Dies führt zu einer weiteren Mischung des Lichtes unterschiedlicher Strukturbereiche der ausgedehnten Lichtquelle, wodurch die Struktur der ausgedehnten Lichtquelle noch stärker verwischt wird. Die Brennweite im zentralen Bereich der Linse kann auch größer als außerhalb dieses zentralen Bereichs sein. Hierdurch wird die Mischung auch verstärkt, aber die mittigen Strahlen treffen sich im Brennpunkt in manchen Stellungen der Linse.

Der Umfang der Linse weist vorzugsweise die Form eines regelmäßigen Sechseckes auf. Hierdurch ist es möglich, mehrere dieser Beleuchtungsvorrichtungen lückenlos nebeneinander anzuordnen. Diese mehreren Beleuchtungsvorrichtungen bilden ein Array von Beleuchtungsvorrichtungen. Bei diesem Array sind vorzugsweise die optischen Achsen der einzelnen Beleuchtungsvorrichtung parallel zueinander angeordnet. Weiterhin sind vorzugsweise Blenden vorgesehen, die jeweils eine Linse umfassen und als Rohrabschnitt ausgebildet sind.

Die Linsen eines solchen Arrays von Beleuchtungsvorrichtungen können mechanisch derart miteinander gekoppelt sein, dass sie nur gemeinsam entlang der jeweiligen optischen Achsen verschieblich sind. Hierdurch wird ein Scheinwerfer mit einem Lichtkegel mit variablem Öffnungswinkel und hohem Lichtstrom gebildet.

Die Lichtquellen des Arrays der Beleuchtungsvorrichtungen sind vorzugsweise in der Draufsicht zueinander jeweils ein Stück verdreht angeordnet. Hierdurch werden die noch im Lichtstrahlkegel verbleibenden Strukturen der einzelnen Lichtquellen nochmals gemischt, um den sich aus den Lichtstrahlkegeln der einzelnen Beleuchtungsvorrichtung ergebenden gesamten Lichtstrahlkegel zu homogenisieren.

Die Erfindung wird nachfolgend beispielhaft anhand der Zeichnung erläutert. Die Zeichnungen zeigen:

Fig. 1     das auf einem Bildschirm im Unendlichen erzeugte Bild eines Lichtstrahlkegels einer Beleuchtungsvorrichtung gemäß der vorliegenden Erfindung,

Fig. 2a     die Beleuchtungsstärke eines mit einem Array von erfindungsgemäßen Beleuchtungsvorrichtungen hergestellten Lichtstrahlkegels, wobei die Beleuchtungsstärke durch entsprechende Graustufen dargestellt ist,

Fig. 2b     die Beleuchtungsstärke des Lichtstrahlkegels aus Fig. 1 entlang eines Schnittes in einem Koordinatensystem,

Fig. 3     das an einem Bildschirm im Unendlichen durch einen Lichtstrahlkegel einer herkömmlichen Beleuchtungsvorrichtung erzeugte Bild, wobei die gleiche Lichtquelle wie zur Erzeugung des Bildes gemäß Fig. 1 verwendet wird,

Fig. 4a     ein zweidimensionales Diagramm der Beleuchtungsstärke eines mit einem Array von herkömmlichen Beleuchtungsvorrichtungen hergestellten Lichtstrahlkegels,

Fig. 4b     die Beleuchtungsstärke des Lichtstrahlkegels aus Fig. 3 entlang einem Schnitt in einem Koordinatensystem,

Fig. 5     einen Schnitt durch eine schematisch dargestellte erfindungsgemäße Beleuchtungsvorrichtung in einer ersten Position der Linse,

Fig. 6     einen Schnitt der schematisch dargestellten erfindungsgemäßen Beleuchtungsvorrichtung in einer zweiten Position,

Fig. 7     eine Beleuchtungsvorrichtung mit Blende in perspektivischer Ansicht,

Fig. 8     die Beleuchtungsvorrichtung nach Fig. 7 in einer Schnittdarstellung,

Fig. 9     ein Array von Beleuchtungsvorrichtungen in perspektivischer Darstellung,

Fig. 10     das Array aus Fig. 9 in einer Seitenansicht, und

Fig. 11     eine erfindungsgemäße Beleuchtungsvorrichtung in der Seitenansicht mit Bemaßung in mm.

Die erfindungsgemäße Beleuchtungsvorrichtung 1 umfasst eine ausgedehnte Lichtquelle 2, einen Reflektor 3 und eine Linse 4.

Eine ausgedehnte Lichtquelle 2 ist eine nichtpunktförmige Lichtquelle, die Strukturen besitzt. Solche Strukturen erzeugen bei einer optischen Abbildung, d.h., wenn die Linse mit dem Brennpunkt in der Nähe der ausgedehnten Lichtquelle angeordnet ist, Strukturen im Lichtstrahlkegel. Dies ist bei Beleuchtungsvorrichtungen zum Ausleuchten von Gegenständen, wie zum Beispiel bei Taschenlampen oder Scheinwerfern, unerwünscht, da dann der Lichtstrahlkegel Bereiche mit stark unterschiedlicher Lichtstärkeverteilung aufweist. Im vorliegenden Ausführungsbeispiel besteht die ausgedehnte Lichtquelle 2 aus einem Array von vier Leuchtdioden bzw. Leuchtdiodenchips. Eine jede Leuchtdiode bzw. ein jeder Leuchtdiodenchip bildet eine Leuchtfläche, die üblicherweise jeweils eine Größe von bis zu 1 mm x 1 mm besitzt. Fig. 3 zeigt das auf einem Schirm im Unendlichen erzeugte Bild einer herkömmlichen Beleuchtungsvorrichtung mit einer solchen aus vier Leuchtdioden bestehenden Lichtquelle. Hierbei ist die Struktur des Leuchtdiodenarrays gut erkennbar. Die Abbildungen der Leuchtdioden sind in Fig. 3 im Uhrzeigersinn mit I, II, III, IV nummeriert, wobei die Leuchtdioden I und III grünes Licht abstrahlen, die Leuchtdiode II blaues Licht und die Leuchtdiode IV rotes Licht abstrahlt. Zwischen den einzelnen Leuchtdioden sind jeweils schmale, streifenförmige, dunkle Bereiche ausgebildet, die im Fernfeld entsprechende dunkle Strukturen in einer herkömmlichen Beleuchtungsvorrichtung verursachen.

Eine ausgedehnte Lichtquelle kann aus ein, zwei, drei oder mehreren Leuchtdioden ausgebildet sein. Ausgedehnte Lichtquellen können auch andere Lichtquellen als Leuchtdioden sein, sofern sie strukturierte Bereiche aufweisen, die bei einer optischen Abbildung der Lichtqelle ins Unendliche zu einem Lichtkegel mit ungleichmäßiger Lichtstärkeverteilung führen.

Im vorliegenden Ausführungsbeispiel weist die ausgedehnte Lichtquelle 2 vier Leuchtdioden auf, die jeweils einen ebenflächigen Lambert-Strahler darstellen. Solche Leuchtdiodenarrays werden zum Beispiel von der Firma Cree Inc., USA unter der Handelsbezeichnung Cree® XLamp® MC-E LED angeboten. Dieses Leuchtdiodenarray besitzt vier Leuchtdioden, die jeweils quadratisch ausgebildet sind. Die Leuchtdioden sind in der Draufsicht innerhalb eines Quadrates angeordnet, wobei zwischen den einzelnen Leuchtdioden ein kreuzförmiger Spalt ausgebildet ist. Die Leuchtdioden können nicht auf Stoß im Leuchtdiodenarray angeordnet sein. Ein Datenblatt (Data Sheet: CLC-DS16 Rev. 5© 2008-2009) dieser Leuchtdioden ist unter www.cree.com/xlamp erhältlich. Dieses Leuchtdiodenarray ist mit integrierter Vorsatzlinse ausgebildet.

Ein weiteres, für die erfindungsgemäße Beleuchtungsvorrichtung geeignetes Leuchtdiodenarray wird von der Firma Seoul Semiconductor unter der Artikelbezeichnung W724C0 vertrieben. Auch dieses Leuchtdiodenarray weist vier im Quadrat angeordnete, quadratische Leuchtdioden auf, wobei zwischen einzelnen Leuchtdioden ein Spalt ausgebildet ist. Hierdurch wird ein kreuzförmiger Bereich verursacht, an dem kein Licht abgestrahlt wird. Auch dieses Leuchtdiodenarray weist eine Vorsatzlinse auf. Ein entsprechendes Datenblatt (Document No.: SSC-QP-7-07-24 /Rev.00) Rev. 03 May 2008)ist unter www.zled.com erhältlich.

Die Lichtquelle 2 ist mit ihrer abstrahlenden Fläche senkrecht zu einer optischen Achse 5 angeordnet, die durch das Zentrum der Lichtquelle verläuft.

Der Reflektor 3 ist als konischer Stumpf ausgebildet, der die Lichtquelle 2 umschließt. Im vorliegenden Ausführungsbeispiel ist der Reflektor ein konischer Stumpf mit quadratischem Querschnitt (Pyramidenstumpf). Die Querschnittsform des Reflektors kann an die Form der Lichtquelle angepasst werden und weist vorzugsweise eine beliebige polygonale Querschnittsform oder die Form eines Kreises auf. Am aufgeweiteten Ende des Reflektors 3 bildet dieser eine Öffnung 6. Am verjüngten Ende des Reflektors 3 ist die Lichtquelle 2 derart angeordnet, dass das Licht zur Öffnung 6 des Reflektors abgestrahlt wird. Die Abstrahlrichtung 7 verläuft somit parallel zur optischen Achse 5 von der Lichtquelle 2 in Richtung zur Öffnung 6. Der Reflektor 3 ist konzentrisch zur optischen Achse 5 angeordnet.

Die Linse 4 ist in Abstrahlrichtung 7 vor dem Reflektor 3 angeordnet. Sie ist konzentrisch zur optischen Achse 5 angeordnet. Die Linse 4 ist innerhalb eines vorbestimmten Bereiches entlang der optischen Achse 5 verschieblich ausgebildet. Durch das Verschieben der Linse 4 kann ein von der Lichtquelle 2 abgegebener und vom Reflektor 3 geformter Lichtstrahlkegel 8 in seinem Öffnungswinkel verändert werden.

In dem vorliegenden Ausführungsbeispiel ist der Verschiebebereich in Abstrahlrichtung derart begrenzt, dass am in Abstrahlrichtung 7 vorderen Rand des Verschiebebereichs der Brennpunkt der Linse 4 in Deckung mit der fiktiven Spitze 9 des Reflektors 3 oder zumindest in Nähe der fiktiven Spitze ist. In dieser maximalen entfernten Stellung der Linse 4 von der Lichtquelle 2 bzw. von dem Reflektor 3 wird der Lichtstrahlkegel 8 maximal zu einem gebündelten Lichtstrahlkegel 8/1 gebündelt (Fig. 5). Diese Stellung der Linse 4 wird daher als Bündelungsstellung bezeichnet.

Befindet sich die Linse 4 hingegen in der Stellung mit geringstem Abstand zur Lichtquelle 2 bzw. zum Reflektor 3 (Fig. 6), dann wird der vom Reflektor vorgeformte Lichtstrahlkegel 8/1 zu einem maximal aufgeweiteten Lichtstrahlkegel 8/2 geformt. Diese Stellung der Linse wird deshalb im Folgenden als aufgeweitete Stellung bezeichnet.

Die erfindungsgemäße Beleuchtungsvorrichtung zeichnet sich dadurch aus, dass sich der Brennpunkt der Linse 4 in der gebündelten Stellung (Fig. 5) in Abstrahlrichtung 7 entweder hinter oder auf einer fiktiven Spitze 9 des konischen Reflektors 3 befindet. Diese fiktive Spitze 9 wird durch gedankliche geradlinige Weiterführung der Reflektorfläche 3 des Reflektors erzeugt.

Hierdurch ist sichergestellt, dass durch die Verschiebung der Linse innerhalb des vorbestimmten Verschiebebereichs der Brennpunkt der Linse nicht in die Nähe der Lichtquelle 2 gelangt, so dass diese mit ihrer ausgedehnten Struktur optisch durch die Linse abgebildet werden würde. Der Brennpunkt hält somit immer einen Mindestabstand, der sich von der Lichtquelle 2 bis zur fiktiven Spitze 9 erstreckt, von der Lichtquelle 2 ein. Hierdurch wird bereits eine erhebliche Vermischung des von den einzelnen Strukturbereichen bzw. einzelnen Leuchtdioden abgestrahlten Lichtes der ausgedehnten Lichtquelle 2 erzielt.

Weiterhin wird durch die Anordnung des Brennpunktes auf bzw. nahe an der fiktiven Spitze 9 des Reflektors 3 das Licht nahezu optimal gebündelt..

Das Etendue (Lichtleitwert) ist eine Erhaltungsgröße optischer Systeme. Mit ihr wird die geometrische Fähigkeit eines optischen Systems bezeichnet, Licht hindurch zu lassen (Lichtdurchgang). Der numerische Wert des Etendue wird als Produkt aus der Öffnungsgröße und dem projizierten Raumwinkel, aus dem das System Licht aufnimmt, berechnet. Der Wert des Etendue (E) einer Lichtquelle wird folgendermaßen berechnet:

$$E = n^2 \cdot A \cdot \pi \cdot \sin^2(\alpha),$$

wobei n der Brechungsindex des die Lichtquelle umgebenden Mediums, A die leuchtende Fläche der Lichtquelle und $\alpha$ der Abstrahlwinkel der Lichtquelle, d.h. der halbe Winkel des abgestrahlten Lichtkegels, ist. Für eine Leuchtdiodenarray mit Flachverguss mit einer Fläche von 4.41 mm$^2$, und einem Abstrahlwinkel von 90° ergibt sich ein Wert der Etendue in Luft (direkt nach Austritt aus dem Vergussmaterial) von 13,85.

Der Wert des Etendue für den Lichtstrahlkegel des optischen Systems der Beleuchtungsvorrichtung berechnet sich gemäß folgender Formel:

$$E = n^2 \cdot d^2 \cdot \pi/4 \cdot \sin^2(\beta) \; \pi,$$

wobei d der Durchmesser der Linse ist und $\beta$ der halbe Öffnungswinkel des erzeugten Lichtstrahlkegels ist.

Diese Formel gilt, sofern die Sekundärlinse den von dem Reflektor austretenden Lichtstrahlkegel vollständig erfasst.

Für einen Durchmesser der Linse d von 34 mm und n=1 folgt für $\beta$ ein minimaler Öffnungswinkel von 4°. Eine stärkere Bündelung ist nur möglich, wenn weniger Licht durch das Linsensystem aufgenommen wird. Mit der in den Figuren 5 und 6 gezeigten Beleuchtungsvorrichtung wurde ein etwas kleinerer Öffnungswinkel in einer Position der Linse realisiert, in der die Linse nur einen Teil des vom Reflektor kommenden Lichtkegels erfasst. Der vom Reflektor aufgenommene Lichtkegel der Lichtquelle ($\pm$90°) entspricht einer numerischen Apertur von 1.

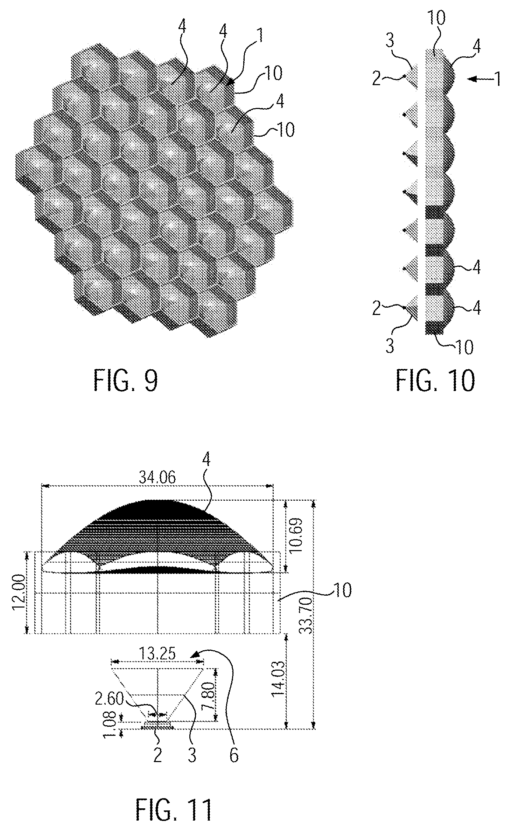

Die Gesamteffizienz der Beleuchtungsvorrichtung hängt von der Länge des Reflektors und der Reflektivität des Reflektormaterials ab. Außerdem ist sie davon abhängig, wie nahe man das verjüngte Ende des Reflektors an den Leuchtdioden anordnen kann. Deshalb sind Leuchtdiodenarrays mit Flachverguss, d.h. mit einem lichtdurchlässigen Verguss mit ebenflächiger Oberfläche, effizienter als Leuchtdiodenarrays mit einer gewölbten Vorsatzlinse. Im realisierten System mit sechseckiger Linse wurde inklusive Fresnelverlusten an der Linse bei einer Reflektivität des Reflektors von 92 % eine Gesamteffizienz von 55% am Lichtaustritt erreicht. Die Abmessungen der Beleuchtungsvorrichtung sind in Figur 11 in mm angegeben:

Mit dieser Beleuchtungsvorrichtung wird somit ein Lichtstrahlkegel mit einem hohen Lichtstrom erzielt, wobei gleichzeitig Licht unterschiedlicher Strukturbereiche bzw. unterschiedlicher Leuchtdioden gut gemischt wird. Fig. 1 zeigt einen mit einer erfindungsgemäßen Beleuchtungsvorrichtung erzeugten Lichtstrahlkegel auf einem Bildschirm im Unendlichen, wobei aufgrund der unterschiedlichen Umsetzung der Farben in Graustufen die gleichmäßige und im Wesentlichen rotationssymetrische Beleuchtungsstärkeverteilung schlecht erkennbar ist, da das Licht im oberen, rechten Quadranten überwiegend blau, im unteren linken Quadranten überwiegend rot und in den beiden übrigen Quadranten überwiegend grün ist und die einzelnen Farben unterschiedlich stark im Graustufenwert umgesetzt werden.

Die Linse 4 der Beleuchtungsvorrichtung ist vorzugsweise multifokal bzw. bifokal, wobei die Brennweite zumindest in einem zentralen Bereich der Linse kleiner als außerhalb dieses zentralen Bereiches der Linse ist. Durch diese unterschiedliche Brechung der Lichtstrahlen wird eine weitere Vermischung des aus unterschiedlichen Strukturbereichen der Lichtquelle stammendes Lichtes erzielt. Für eine derartige multifokale Linse gilt, dass der Brennpunkt des flächengrößten Teils der Linse in Abstrahlrichtung vorzugsweise immer hinter oder auf der fiktiven Spitze 9 des Reflektors angeordnet ist.

Vorzugsweise weist die erfindungsgemäße Beleuchtungsvorrichtung 1 eine Blende 10 auf. Die Blende 10 ist als Rohrabschnitt ausgebildet, der koaxial zur optischen Achse 5 angeordnet ist und die Linse 4 umfasst. Die Blende 10 erstreckt sich von der Linse 4 zumindest ein Stück entgegen der Abstrahlrichtung 7. Die Blende schirmt Streulicht aus dem Lichtstrahlkegel 8 ab, das seitlich an der Linse 4 vorbeitreten würde.

Eine solche Beleuchtungsvorrichtung 1 mit Blende 10 eignet sich besonders vorteilhaft zur Ausbildung eines Arrays von Beleuchtungsvorrichtungen, da die einzelnen Beleuchtungsvorrichtungen lückenlos aneinandergesetzt werden können, ohne dass die einzelnen Beleuchtungsvorrichtungen durch Streulicht benachbarter Beleuchtungsvorrichtungen gestört werden. Vorzugsweise ist die Umfangsform der jeweiligen Linse 4 und der Blende 10 ein regelmäßiges Sechseck. Dies erlaubt eine lückenlose Anordnung einer Vielzahl von Beleuchtungsvorrichtungen, wobei die Umfangsform eines regelmäßigen Sechseckes der Kreisform wesentlich ähnlicher als die eines Quadrates, so dass die Linsen 4 trotz der polygonalen Form zur Ausbildung eines im Wesentlichen im Querschnitt kreisförmigen Lichtstrahlkegels geeignet sind.

Die einzelnen Linsen der zu einem Array von Beleuchtungsvorrichtungen zusammengefassten Beleuchtungsvorrichtungen sind derart mechanisch miteinander gekoppelt, dass sie gemeinsam bezüglich der Lichtquellen verschoben werden. Die Lichtquellen des Arrays sind alle in einer Ebene angeordnet. Die optischen Achsen der Beleuchtungsvorrichtungen sind parallel zueinander. Die Linsen des Arrays von Beleuchtungsvorrichtungen sind auch in einer Ebene angeordnet. Vorzugsweise sind die einzelnen Beleuchtungsvorrichtungen mit ihren ausgedehnten Lichtquellen in der Draufsicht zueinander jeweils ein Stück verdreht angeordnet, so dass falls in den Lichtstrahlkegeln der einzelnen Beleuchtungsvorrichtungen noch eine Struktur der Lichtquelle erkennbar sein sollte, diese Strukturen über die mehreren Lichtstrahlkegel der Beleuchtungsvorrichtungen ausgleichen. Eine solche Struktur kann sich bspw. bei Verwendung von Leuchtdioden ergeben, die Licht mit unterschiedlichen Farben ausstrahlen, so dass von einer einzelnen Beleuchtungsvorrichtung ein Lichtstrahlkegel mit unterschiedlich farbigen Bereichen erzeugt wird. Durch das Verdrehen der einzelnen Beleuchtungsvorrichtungen ergibt sich ein gesamter Lichtstrahlkegel mit gleichmäßiger Helligkeit und Farbe.

In Fig. 2a und Fig. 2b ist die Beleuchtungsstärkeverteilung eines solchen Lichtstrahlkegels in einer Querschnittsfläche (Fig. 2a) und entlang einer Querschnittslinie (Fig. 2b) dargestellt. In Fig. 2a und 4a sind die Beleuchtungsstärken (Lux) in Graustufen und in Figur 2b und 4b jeweils in einem Koordinatensystem angegeben, wobei auf der Abszissenachse die Beleuchtungsstärke aufgetragen ist. Die Beleuchtungsstärkeverteilung eines Arrays mit erfindungsgemäßen Beleuchtungsvorrichtungen ist im Wesentlichen rotationssymmetrisch (Fig. 2a, 2b) und weist im Zentrum keine Verdunkelung auf, wie es bei einem Array herkömmlicher Beleuchtungsvorrichtung (Fig. 4a und 4b) der Fall ist. Die Beleuchtungsvorrichtungen beider Arrays weisen die gleichen, ausgedehnten Lichtquellen, wie zum Beispiel ein Leuchtdiodenarray, auf.

Bei obigem Ausführungsbeispiel ist der Verschiebebereich der Linse 4 derart begrenzt, dass sich deren Brennpunkt immer hinter der fiktiven Spitze 9 oder auf der fiktiven Spitze 9 befindet. Dies ist die bevorzugte Ausführungsform. Im Rahmen der Erfindung ist es jedoch grundsätzlich auch möglich, den Verschiebebereich der Linse 4 so zu gestalten, dass die Linse mit ihrem Brennpunkt von der der fiktiven Spitze 9 in Richtung zur Lichtquelle 2 bewegt werden kann.

Bezugszeichenliste

1 Beleuchtungsvorrichtung
2 Ausgedehnte Lichtquelle
3 Reflektor
4 Linse
5 Optische Achse
6 Öffnung
7 Abstrahlrichtung
8 Lichtstrahlkegel
9 Fiktive Spitze
10 Blende

Patentansprüche

1. Beleuchtungsvorrichtung umfassend

   - eine ausgedehnte Lichtquelle (2),

- einen Reflektor (3), der die Lichtquelle (2) umschließt und als konischer Stumpf mit einer Öffnung (6) am aufgeweiteten Ende des Reflektors (3) und einem verjüngten Endbereich, an dem die Lichtquelle (2) derart angeordnet ist, dass das Licht zur Öffnung (6) des Reflektors (3) abgestrahlt wird, ausgebildet ist, wobei Mantellinien des Reflektors (3) sich in einer fiktiven Spitze (9) schneiden, wobei die Beleuchtungsvorrichtung eine optische Achse (5) aufweist und die Abstrahlrichtung parallel zur optischen Achse (5) von der Lichtquelle (2) in Richtung zur Öffnung (6) verläuft, - eine Linse (4) zum Bündeln des abgestrahlten Lichtes, wobei die Linse (4) entlang der optischen Achse (5) der Beleuchtungsvorrichtung (1) innerhalb eines vorbestimmten Verschiebebereichs verschieblich angeordnet ist, **dadurch gekennzeichnet, dass** der Brennpunkt der Linse (4) in Abstrahlrichtung (7) zumindest in einem Bereich hinter der fiktiven Spitze (9) des Reflektors (3) verschoben werden kann.

2. Beleuchtungsvorrichtung nach Anspruch 1, **dadurch gekennzeichnet,** **dass** der Verschiebebereich der Linse (4) sich in Abstrahlrichtung (7) so weit nach vorne erstreckt, dass der Brennpunkt der Linse (4) in Deckung mit der fiktiven Spitze (9) des Reflektors (3) oder zumindest in unmittelbare Nähe zur fiktiven Spitze gebracht werden kann.

3. Beleuchtungsvorrichtung nach Anspruch 1 oder 2, **dadurch gekennzeichnet,** **dass** die ausgedehnte Lichtquelle (2) mehrere Leuchtflächen aufweist, wobei die einzelnen Leuchtflächen zum Abstrahlen von Licht unterschiedlicher Wellenlängenbereiche ausgebildet sein können.

4. Beleuchtungsvorrichtung nach einem der Ansprüche 1 bis 3, **dadurch gekennzeichnet,** **dass** die ausgedehnte Lichtquelle (2) mehrere Leuchtdiodenchips aufweist, die von einem Flachverguss abgedeckt sind.

5. Beleuchtungsvorrichtung nach einem der Ansprüche 1 bis 4, **dadurch gekennzeichnet,** **dass** die Lichtquelle (2) ein Leuchtdiodenarray ist und der Reflektor im Querschnitt eine regelmäßige polygonale Form aufweist.

6. Beleuchtungsvorrichtung nach einem der Ansprüche 1 bis 5, **dadurch gekennzeichnet,** **dass** die Linse (4) derart groß bemessen ist, dass sie im maximalen Abstand der Linse (4) vom Reflektor (3) den vom Reflektor (3) austretenden Lichtstrahlkegel vollständig umfasst.

7. Beleuchtungsvorrichtung nach einem der Ansprüche 1 bis 6,
   **dadurch gekennzeichnet,**
   **dass** die Linse (4) multifokal ist, wobei die Brennweite zumindest in einem zentralen Bereich der Linse (4) kleiner als außerhalb dieses zentralen Bereichs der Linse (4) ist.

8. Beleuchtungsvorrichtung nach einem der Ansprüche 1 bis 7,
   **dadurch gekennzeichnet,**
   **dass** der Umfang der Linse (4) die Form eines regelmäßigen Sechseckes aufweist.

9. Beleuchtungsvorrichtung nach einem der Ansprüche 1 bis 8,
   **dadurch gekennzeichnet,**
   **dass** die Linse (4) von einer Blende (10) umfasst wird, die als zur optischen Achse (5) koaxialer Rohrabschnitt ausgebildet ist.

10. Beleuchtungsvorrichtung nach einem der Ansprüche 1 bis 9,
    **dadurch gekennzeichnet,**
    **dass** der Verschiebebereich der Linse (4) in Abstrahlrichtung (7) derart begrenzt ist, dass am in Abstrahlrichtung (7) vorderen Rand des Verschiebebereichs der Brennpunkt der Linse (4) in Deckung mit der ausgedehnten Lichtquelle (2) ist.

11. Beleuchtungsvorrichtung nach einem der Ansprüche 1 bis 9,
    **dadurch gekennzeichnet,**
    **dass** der Verschiebebereich der Linse (4) in Abstrahlrichtung (7) derart begrenzt ist, dass am in Abstrahlrichtung (7) vorderen Rand des Verschiebebereichs der Brennpunkt der Linse (4) in Deckung mit der fiktiven Spitze (9) des Reflektors (3) oder zumindest in Nähe der fiktiven Spitze ist.

12. Array von Beleuchtungsvorrichtungen,
    **dadurch gekennzeichnet,**
    **dass** das Array mehrere Beleuchtungsvorrichtungen (1) nach einem der Ansprüche 1 bis 11 aufweist, die mit ihren optischen Achsen (5) parallel zueinander angeordnet sind, wobei sich die Lichtquellen (2) in einer Ebene befinden.

13. Array nach Anspruch 12,
    **dadurch gekennzeichnet,**
    **dass** die Linsen (4) der einzelnen Beleuchtungsvorrichtungen (1) mechanisch derart miteinander gekoppelt sind, dass sie nur gemeinsam entlang der jeweiligen optischen Achsen (5) verschieblich sind.

14. Array nach Anspruch 12 oder 13,
    **dadurch gekennzeichnet,**
    **dass** die Beleuchtungsvorrichtungen (1) lückenlos nebeneinander angeordnet sind.

15. Array nach einem der Ansprüche 12 bis 13,
    **dadurch gekennzeichnet,**
    **dass** die ausgedehnten Lichtquellen (2) in der Draufsicht zueinander jeweils ein Stück verdreht angeordnet sind.

**Claims**

1. Illuminating device comprising

   - a broad light source (2),
   - a reflector (3), which comprises the light source (2) and which is formed as conical stump with an opening (6) at the widened end of the reflector (3) and a tapered end at which the light source (2) is positioned so that light radiates towards the opening (6) of the reflector (3), wherein surface lines of the reflector (3) intersect in a fictitious tip (9),
   - a lens (4) for bundling the radiated light, wherein the lens (4) is positioned relocatable along an optical axis (5) of the illuminating device (1) within a predetermined relocation area such that the focal point of the lens (4) in radiation direction (7) can be relocated to a zone behind the fictitious tip (9) of the reflector (3).

2. Illuminating device according to claim 1,
   **characterised in that**
   the relocation area of the lens (4) extends in radiation direction (7) so far towards the front, that the focal point of the lens (4) coincides with the fictitious tip (9) of the reflector (3), or at least can be brought directly proximate to the fictitious tip.

3. Illuminating device according to claim 1 or 2,
   **characterised in that**
   the broad light source (2) has several illuminated areas , wherein the single illuminated areas can be formed for radiating light of different wave length intervals.

4. Illuminating device according to one of claims 1 to 3,
   **characterised in that**
   the broad light source (2) has several light emitting diode chips, which are covered with a planar coating.

5. Illuminating device according to one of claims 1 to 4,
   **characterised in that**
   the light source (2) is a light emitting diode array and the reflector in cross section has a regular polygonal form.

**6.** Illuminating device according to one of claims 1 to 5, **characterised in that** the lens (4) is dimensioned so large, that in the maximal distance of the lens (4) from the reflector (3) it totally comprises the light radiation cone emanating from the reflector (3).

**7.** Illuminating device according to one of claims 1 to 6, **characterised in that** the lens (4) is multifocal, wherein the focal length at least in a central area of the lens (4) is smaller than outside this central area of the lens (4).

**8.** Illuminating device according to one of claims 1 to 7, **characterised in that** the circumference of the lens (4) has the form of a regular hexagon.

**9.** Illuminating device according to one of claims 1 to 8, **characterised in that** the lens (4) is comprised within a diaphragm (10), which is formed as a tubular section coaxial to the optical axis (5).

**10.** Illuminating device according to one of claims 1 to 9, **characterised in that** the relocation area of the lens (4) in radiation direction (7) is limited so that at the front edge in radiation direction (7) of the relocation area the focal point of the lens (4) coincides with the broad light source (2).

**11.** Illuminating device according to one of claims 1 to 9, **characterised in that** the relocation area of the lens (4) in radiation direction (7) is limited so that at the front edge in radiation direction (7) of the relocation area the focal point of the lens (4) coincides with the fictitious tip (9) of the reflector (3) or is at least close to the fictitious tip.

**12.** Array of illuminating devices, **characterised in that** the array has several illuminating devices (1) according to one of claims 1 to 11, which with their optical axes (5) are positioned in parallel to each other, wherein the light sources (2) are within a plane.

**13.** Array according to claim 12, **characterised in that** the lenses (4) of the single illuminating devices (1) are mechanically coupled with each other so that they are only relocatable together along the respective optical axes (5).

**14.** Array according to claim 12 or 13, **characterised in that** the illuminating devices (1) are positioned adjacent without interruption.

**15.** Array according to one of claims 12 to 13, **characterised in that** the broad light sources (2) in the top view are respectively positioned partly rotated one to each other.

**Revendications**

**1.** Dispositif d'éclairage comprenant

- une source lumineuse étendue (2),
- un réflecteur (3) qui enferme la source lumineuse (2) et qui est formé en tant que souche conique avec une ouverture (6) à l'extrémité plus ouverte du réflecteur (3) et une extrémité effilée à laquelle la source lumineuse (2) est positionnée de telle manière, que la lumière est émise vers l'ouverture (6) du réflecteur (3), des génératrices du réflecteur (3) se croisant dans une pointe fictive (9),
- une lentille (4) pour le regroupement de la lumière émise, la lentille (4) étant positionnée de telle manière le long d'un axe optique (5) du dispositif d'éclairage (1) et pouvant être déplacée à l'intérieur d'une zone de déplacement prédéterminée, que le foyer de la lentille (4) en direction de rayonnement (7) peut au moins être déplacé dans une zone derrière la pointe fictive (9) du réflecteur (3).

**2.** Dispositif d'éclairage selon la revendication 1, **caractérisé en ce que** la zone de déplacement de la lentille (4) s'étend en direction de rayonnement (7) tellement vers le devant, que le foyer de la lentille (4) peut être amené a coïncider avec la pointe fictive (9) du réflecteur (3) ou au moins être amené à une proximité immédiate de la pointe fictive.

**3.** Dispositif d'éclairage selon la revendication 1 ou 2, **caractérisé en ce que** la source lumineuse étendue (2) a plusieurs surfaces lumineuses, les surfaces lumineuses respectives pouvant être formées pour émettre de la lumière en différents intervalles de longueurs d'onde.

**4.** Dispositif d'éclairage selon l'une des revendications 1 à 3, **caractérisé en ce que** la source lumineuse étendue (2) comprend plusieurs puces pour diode électroluminescente recouvertes par un scellage plan.

**5.** Dispositif d'éclairage selon l'une des revendications 1 à 4, **caractérisé en ce que** la source lumineuse (2) est un réseau de diodes électroluminescentes et que le réflecteur a une coupe transversale de forme polygonale régulière.

6. Dispositif d'éclairage selon l'une des revendications 1 à 5,
   **caractérisé en ce que**
   la lentille (4) est dimensionnée tellement grande, qu'à la distance maximale de la lentille (4) du réflecteur (3) elle comprend complétement le cône du faisceau lumineux sortant du réflecteur (3).

7. Dispositif d'éclairage selon l'une des revendications 1 à 6,
   **caractérisé en ce que**
   la lentille (4) est multifocale, la focale dans une zone centrale de la lentille (4) étant inférieure qu'en dehors de cette zone centrale de la lentille (4).

8. Dispositif d'éclairage selon l'une des revendications 1 à 7,
   **caractérisé en ce que**
   la circonférence de la lentille (4) a la forme d'un hexagone régulier.

9. Dispositif d'éclairage selon l'une des revendications 1 à 8,
   **caractérisé en ce que**
   la lentille (4) est comprise par un diaphragme (10), qui est formé en tant que tronçon tubulaire coaxial par rapport à l'axe optique (5).

10. Dispositif d'éclairage selon l'une des revendications 1 à 9,
    **caractérisé en ce que**
    la zone de déplacement de la lentille (4) en direction de rayonnement (7) est limitée de telle manière, que le foyer de la lentille (4) coïncide avec la source lumineuse étendue (2) au bord devant de la zone de déplacement en direction de rayonnement (7).

11. Dispositif d'éclairage selon l'une des revendications 1 à 9,
    **caractérisé en ce que**
    la zone de déplacement de la lentille (4) en direction de rayonnement (7) est limitée de telle manière, que le foyer de la lentille (4) coïncide avec la pointe fictive (9) du réflecteur (3) au bord devant de la zone de déplacement en direction de rayonnement (7), ou se trouve au moins en proximité de la pointe fictive.

12. Réseau de dispositifs d'éclairage,
    **caractérisé en ce que**
    le réseau a plusieurs dispositifs d'éclairage (1) selon l'une des revendications 1 à 11, qui sont positionnés avec leurs axes optiques (5) parallèlement les uns aux autres, la source lumineuse (2) se trouvant dans un plan.

13. Réseau selon la revendication 12,
    **caractérisé en ce que**
    les lentilles (4) des dispositifs d'éclairages respectifs (1) sont mécaniquement couplés ensemble de telle manière, qu'elles sont seulement déplacable ensemble le long des axes optiques (5) respectifs.

14. Réseau selon la revendication 12 ou 13,
    **caractérisé en ce que**
    les dispositif d'éclairage (1) sont positionnés sans interruptions les uns à côté des autres.

15. Réseau selon l'une des revendications 12 à 13,
    **caractérisé en ce que**
    les sources lumineuse étendues (2), en vue de dessus, sont respectivement positionnées un peu tournées les unes envers les autres.

FIG. 1

FIG. 2a

FIG. 2b

Stand der Technik

FIG. 3

X (mm) = 0, Y (mm) = 0, Value = 0

FIG. 4a

Current Y Slice (mm)

FIG. 4b

FIG. 5

FIG. 6

FIG. 7

FIG. 8

FIG. 9

FIG. 10

FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29804248 U1
- DE 19901391 A1
- DE 8622788 U1
- US 2282167 A
- EP 2211089 A1
- US 2006092643 A1
- US 6200002 B1